# EUROPEAN PATENT SPECIFICATION

(11) **EP 2 905 932 B1**
(45) Date of publication and mention of the grant of the patent: **26.12.2018**
(21) Application number: 14162518.6
(22) Date of filing: 29.03.2014
(51) Int. Cl.: H04L 12/803, H04L 12/707, H04L 12/721

(54) **Method for multiple path packet routing**
Verfahren zum Zielführen von Paketen in mehreren Pfaden
Procédé de routage de paquets à trajets multiples

(30) Priority: 05.08.2013 PL 40498613
(43) Date of publication of application: 12.08.2015
(73) Proprietor: Akademia Gorniczo-Hutnicza im. Stanislawa Staszica w Krakowie, 30-059 Krakow (PL)
(72) Inventor: Domzal , Jerzy, 30-059 Cracow (PL); Wójcik, Robert, 30-059 Kraków (PL); Dulinski, Zbigniew, 30-059 Kraków (PL)
(74) Representative: Górska, Anna

(56) References cited:
- US-A1- 2004 243 563
- US-A1- 2013 070 762
- US-A1- 2013 100 957

## Description

### Field of the Invention

The invention presents a method of multipath routing of packets in IP (Internet Protocol) networks. The proposed solution allows for determination of transmission paths for traffic in an intelligent way, taking into consideration current link throughput levels. In this way, it is possible to allocate resources in a more effective way.

### Background of the Invention

In currently used routers, a routing table is used to determine the outgoing interface for the packet being served. The table contains information, stored in the router's memory, such as a list of nodes through which the destination networks are visible.

The goal of the present invention is to add a flow forwarding table (FFT) to the router, which will then handle and steer packets based on the FFT's content. The content of the FFT itself will be updated based on the routing table.

The routing table contains entries which allow for forwarding of the packets arriving at the router to each destination network or subnetwork. The routing table is set up and maintained in the physical memory of the router. A typical entry in the routing table contains the address of the destination subnetwork, a metric and an identifier or address for the outgoing interface, through which the subnetwork is available. In most cases, there is only one - the most favourable interface for each destination subnetwork in the routing table.

It is desirable that computer networks do not become congested, which is observed when more information than is possible to be sent needs to be processed. Load balancing is one method of eliminating congestion, the main goal of which is to send traffic to its destination node through several paths.

Load balancing allows for maintenance of several interfaces in the routing table with the same or different metrics, to the same destination subnetwork. Based on the current load, traffic is sent to each available outgoing interface according to assigned weights. In other words, the router sends packets to the destination network through different outgoing interfaces. Using load balancing, the packets of one flow may come to the destination node through different paths and in a different order. Moreover, this can cause the network to become inefficiently loaded. Some elements may become congested, and others not.

A group of packets may be considered to be 'a flow' when they are sent between the same nodes and have the same values in selected fields of their packet headers. These fields are usually the source and destination addresses, port numbers (source and destination) and the identifier for the transport layer protocol (in accordance with the Open System Interconnection - OSI/ISO model).

Currently, multipath transmission is possible under the MPLS (Multi-Protocol Label Switching) protocol. The MPLS standard is defined in RFC3031. Routers using the MPLS protocol send packets based on labels placed between the Layer 2 and Layer 3 headers. Altogether, routers using the MPLS protocol comprise the MPLS domain. A packet arriving at the border router of the MPLS domain, known as the Provider Edge router (PE router), is given the MPLS label and sent to the proper outgoing interface. Inside the MPLS domain, routers use only MPLS label for packet forwarding. Such routers are known as Provider routers (P routers). Each router on the packet's path has its own label switching table. Outgoing packets at the border of the MPLS domain have their MPLS label removed by the PE router, or one router before the PE router - outside the MPLS domain, the packet is served based on IP routing rules. Use of MPLS labels allows for the creation of un-equivalent paths and the subsequent sending of packets through different paths.

The label switching rules in routers must be set up before any packets are sent, as special protocols are used for label distribution in networks. The paths through which packets are sent also need to be set up beforehand. It is possible to distribute labels in such a way that the assigned paths are different from the paths estimated from the routing table, and this is an element of traffic engineering. Usually, paths which differ from those set up in the routing table have been set up statically by human operators, in most cases with Resource Reservation Protocol-Traffic Engineering (RSVP-TE), described in RFC3209 (updated and extended in RFC5151). MPLS does not allow for the creation and removal of paths dynamically, based on a network's current traffic load, but are set up permanently by the operator. MPLS also does not allow for alternative, optimal paths to be found in an operator's network. However, the router proposed in this present invention is able to find alternative, optimal paths.

The method by which a router selects the route to the destination node, wherein metrics like throughput, delay and jitter are considered, was presented in US Patent No. US9197544 B2, published in 2012. In it, paths are established between two nodes, written in the routing table and periodically updated. As a result, the most effective path can be selected at any given moment.

An equivalent method for multipath packet routing in IP networks was presented in Patent No. WO2013059683 A1. Here, a holding information on the entire network decides which path should be selected. In this way, the optimal path can be chosen based on the actual network conditions. The main advantages here are the minimisation of delays, increase of the amount of traffic transmitted through the network, and the limitation of jitter. The centralised control system, however, may result in lack of scalability.

The method for multipath transmission of packets aggregated into groups is described in Patent No. WO2007060041 selected based on a traffic matrix and are transmitted through paths selected by a central point in the network, with the goal of increasing the overall traffic transmitted. One of the drawbacks is, again, the central controller, which offers a focal point for failure.

The method for routing packets in mobile networks was proposed in US Patent No. US7242678 B2, published in 2007. This patent, for something called "Edge Mobility Architecture (EMA)", demonstrated "Mobile Enhanced Routing (MER)", for packet forwarding in mobile networks. The signalling overhead generated as a result of a mobile device's IP address changes, is limited. This is made possible by generating unicast packages to update the mobile device's status between old- and new-access routers.

The method for packet routing in IP networks using multiple protocols in one domain was presented in US Patent No. US7177646 B2, published in 2007. This invention presents methods for using several types of routing updates in one domain.

The method for balanced routing of IP packets based on collection and analysis of traffic characteristics on selected transmission paths was presented in US Patent No. US7136357 B2. The information then distributed to other routers in the network, which then decide whether or not a path should be added to their routing tables. If there are several paths between the same nodes in the routing table, traffic is evenly distributed among them (each path has the same weight).

The method and system for routing of data streams in networks with multiple topologies were proposed in US Patent No. US8320277 proposed solution, resources are assigned proportionally according to weights connected with data streams. Moreover, the link metrics of particular topologies are also considered. For each topology, a separate routing table is maintained.

The method for intelligent routing of packets in Flow-Aware Networks was proposed in Polish Patent Application No. P.398761, which describes how packets are sent to selected outgoing interfaces based on the content of a protected flow list. The identifier of the outgoing interface is written to the protected flow list when the first packet of a flow arrives at the router. The outgoing interface is then selected based on the routing table.

In the EIGRP protocol, described in detail in a Cisco document entitled "Enhanced Interior Gateway Routing Protocol", ID=16406, several parameters are used to determine link costs. The most important are link bandwidth and delay. Current load in a link may also be observed. However, in such cases the costs of links can frequently change, and as a result the routing tables are updated more frequently. Allowing for creation of an increased number of loops in a network is also undesirable. However, the present patent is based on a mechanism which protects the network against loops.

The table of flow information, with instructions on how to treat them, was implemented in the OpenFlow switch (the 1.4 version of documentation for this switch is available at www.opennetworking.org). The device presented in this document uses a similar table, albeit one that operates in a different way. In the OpenFlow switch, flow instructions are generated by the central controller, which is responsible for management of all devices in a network. The device presented herein works independently, creating its own new registrations in the flow table. In this way, the present invention operates in a similar way as the OpenFlow switch, however, the central controller is not needed. As a result, it allows for decentralised control, is cheaper, consumes less network resources, does not feature a single failure point, and is properly scalable.

In US patent application US 2013/100957 A1 the inventors propose the use of flow tables in routers to manage the flows. It is not specified which fields from the IP packet header need to be stored in the flow table, although the flexibility in this approach is proposed. The invention requires the use of a central controller - an entity which will install instructions (policies) what each router should do with particular flows. In our invention, we do not use a central controller. Our routers operate independently. Also, a signalling protocol is required for the controller to control particular routers. Our invention does not require a signalling protocol.

In US patent application 2013/070762 A1, it is proposed to use flow tables (similar to US 2013/100957) in a virtualized environment. In this case, a set of routers can create virtual networks and in virtual instance, a specific instructions for each flow can be stored. Similarly to the previous case, this solution requires a central controller and a signalling protocol to operate.

In US patent application US 2004/243563 A1 it is shown how can the flow table lookup operation be optimized. The invention proposes a method to store flows in a flow table in such a way that the lookup procedure (which can take a long time in large tables) can be expedited. This solution can be employed in our invention presented in this document, although it is not necessary.

### Summary of the Invention

The invention relates to a method for routing a packet through a router comprising:
- establishing a flow identifier based on the header of a received packet;
- determining (A) if the flow identifier is present in a flow forwarding table, FFT;
   if the flow identifier is present in the FFT, reading (B) an outgoing interface of the router from the FFT;
   if the flow identifier is not present in the FFT, reading (C) an outgoing interface from a routing table of the router and adding an entry for the flow including a flow identifier and the outgoing interface read from the routing table;
- updating (E) the arrival time of the packet's flow in the FFT;
- sending (F) the packet to the outgoing interface,
wherein the entries in the FFT remain unchanged when the routing table changes.

Wherein the FFT entry for a flow additionally includes a TTL value, and wherein the method further comprises in a preferred embodiment:
- when a packet is received, comparing its TTL value with the value from the FFT for the packet's flow; and
- when the values are not the same, the entry of the packet's flow is removed from the FFT.

The invention presented herein uses a new routing method designed for IP networks, FAMTAR (Flow-Aware Multi-Topology Adaptive Routing). Incoming packets which represent flows are analysed by the router. Next, they are forwarded to the outgoing interface according to the Flow Forwarding Table (FFT) which is a known structure from US patent application US 2013/100957 A1 and US 2013/070762 A1, but in a unique way. When there is no entry corresponding to the flow represented by the incoming packet, the router adds the ID of the flow to the FFT, while the outgoing interface for the flow is taken from the current routing table.

FAMTAR uses the currently popular notion of identifying network traffic with the concept of flows. Although, the term 'flow' is already known from the literature, it is interpreted rather ambiguously. It is always, however, a stream of information belonging to one connection between two end users or applications. Flow ID can be established according to one of the established methods without impacting the present invention.

For example, the Flow-Aware Networking (FAN) architecture defines a 'flow' as a flight of packets, locatable in time and space and having the same unique identifier. The identifier is calculated as a hash of 5 header fields: IP addresses, transport layer port numbers and the ID of the transport layer protocol used (e.g. TCP or UDP).

The novelty in this invention is the method used to control flows in a network: for each packet, the outgoing interface is taken from the FFT (rather than from the routing table), with FFT entries added as soon as the packet of a new flow appears and which remain unchanged when the routing table changes.

A router is a network device which operates in the third layer of the OSI model and is used to connect computer networks - it plays the role of a switching node.

### Description of the Drawings

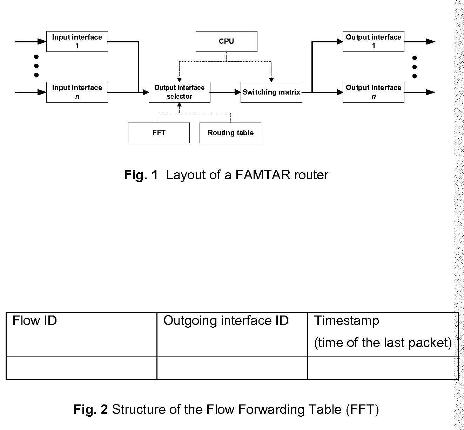

The submitted invention is illustrated in Fig. 1, which also presents an example usage.

Routers are composed of input interfaces, an output interface selector, a switching matrix, a routing table, a CPU and output interfaces. Each incoming packet is analysed. The output interface selector determines the proper outgoing interface based on the information from the routing table, and passes this information to the switching matrix. The switching matrix is responsible for physically forwarding the packet to the proper outgoing interface. The operation of the outgoing port selector and the switching matrix is controlled by the CPU.

One element of every router is its routing table, which contains information on the interface that each packet should be forwarded to, based on the destination IP address found in the packet header. The routing table is therefore consulted for each incoming packet. When changes occur in the network (e.g. after failures, the addition of new networks, links, devices, routing policy changes, etc), the routing tables on all routers in the network are updated. Routing table updates impact all packets coming along after the update.

An element in router architecture used in this invention and shown in Fig. 1 is the previously-mentioned Flow Forwarding Table (FFT). The FFT contains the outgoing interface identifiers on which packets belonging to given flows are forwarded, and is consulted by the outgoing port selector. Based on the flow identifier, the outgoing interface identifier is obtained. If the FFT contains information on a flow, the routing table is not consulted by the outgoing interface selector. In current routers the routing tables are consulted for each and every packet. In the invention, if a certain flow is not present in the FFT, a new entry is created in the FFT, where the outgoing interface is taken from the current routing table.

Unlike the routing table, a FFT is static. Once created, the entries do not change, with one exception: the timestamp, which is the time at which the last packet of a flow appeared, is updated on each packet. Based on the timestamp, it is then possible to determine the elapsed time since the appearance of the last packet of each flow.

In the present invention, when congestion on a link occurs, the link cost is increased in the routing protocol, taking the maximum cost value or a special value indicating congestion. Consequently, applied routing protocol propagates cost change information and recalculates routes using new costs. Routing tables on routers may change, but in the invention, a FFTs remain unchanged. This means that only new flows with identifiers not present in a FFT during an update are affected by routing table changes. Active flows present on a FFT list during the update are unaffected by changes. Thanks to this behaviour, in times of congestion new flows are directed along alternative paths, whereas all existing traffic travels via existing paths, without change.

Figure 2 presents the structure of an FFT, which is stored in the physical memory of the router and contains at least the following fields:
- Flow identifier,
- Router outgoing interface identifier, through which packets belonging to respective flows are sent,
- Table entries enabling identification of precise time intervals between the arrival of the last served packet belonging to a flow and the arriving packet belonging to this flow. If for a pre-defined period of time t a new packet belonging to the flow does not appear, its FFT entry is removed. If a packet belonging to the removed flow then appears after time t elapses, it is treated as a new flow.

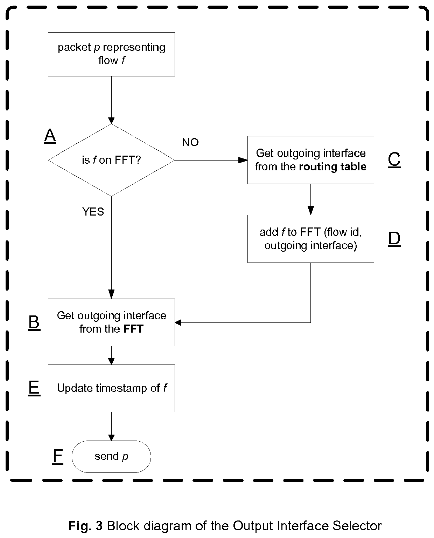

The operating schema for an outgoing interface selector that a router uses is presented in Figure 3. A flow identifier is established based on the respective fields of IP packet headers. It is then determined whether or not this identifier is present in the FFT (A). If the flow identifier is present in the FFT, an outgoing interface number on a router is read (B) and the packet is directed to it. Next, the 'arrival time of the last packet' value is updated (E) (which can be represented by the current time), and the packet is sent to the interface indicated by a FFT using the switching matrix of the router (F). If the flow is not found in a FFT, then a respective outgoing interface is read from the router routing table (C). An identifier for this flow is added to the FFT (D) together with an outgoing interface number to which packets belonging to that flow should be directed. The rest of the procedure is similar to before, i.e. an 'arrival time of the last packet' value is updated (E) (current time may be registered) and the packet is sent to the interface indicated by a FFT using the switching matrix of router (F).

The essence of the proposed invention lies in the fact that for network operation and information transfer in a network it doesn't matter whether an entry in a FFT is placed first and a packet is then sent to an outgoing interface, or whether the packet is first sent to an outgoing interface and the next related entry is written to a FFT.

While, the order of information transfer and entry placement in a FFT is generally irrelevant, it is better to send a packet first and then add an entry to a FFT, and in this way minimise packet transfer delay.

With the IPv4 protocol, the Time to Live field (TTL) contains the figure for the maximum number of hops a packet can make on its path. Subsequent routers along the path decrease the value of a TTL field of each forwarded packet by 1. If a router gets a packet with a TTL equal to 0, the packet is dropped and removed from the network. This procedure helps avoid congestion when routing paths include misconfigured routers or when other failures occur. With IPv6, the field Hop Limit works identically.

When adding a new flow to a FFT, it is beneficial to store a TTL value from the IPv4 packet header or Hop Limit from the IPv6 packet header (depending on which protocol is used). Next, for each incoming packet, a router checks if a TTL (or Hop Limit) in the packet header matches the value stored in a FFT for the corresponding flow. If both values are the same, the packet is forwarded according to the procedure presented before. If the values do not match, the flow represented by the packet is erased from a FFT, and the packet processing procedure is restarted. In this way, after a TTL (or Hop Limit) mismatch is observed, a path for a given flow may change, since the flow record was erased from a FFT (along with the recorded packet forwarding interface) and then recreated, but with an outgoing interface taken from the current routing table.

This represents another benefit of FAMTAR, as it eliminates the appearance of loops. Loops in FAMTAR may appear more often than in standard networks, because at the moment of the occurrence of a failure, or after any link cost change, routing protocols need some time to update the respective routing tables. Flows which appear in the network before changes happen are bound to proper interfaces, and without checking a TTL (or Hop Limit) field, those interfaces would never be changed. In this way, loops can occur which are not resolved by simple changes in the routing tables.

## Claims

1. A method for routing a packet through a router comprising:
- establishing a flow identifier based on the header of a received packet;
- determining (A) if the flow identifier is present in a flow forwarding table, FFT;
if the flow identifier is present in the FFT, reading (B) an outgoing interface of the router from the FFT;
if the flow identifier is not present in the FFT, reading (C) an outgoing interface from a routing table of the router and adding an entry for the flow including a flow identifier and the outgoing interface read from the routing table;
- updating (E) the arrival time of the packet's flow in the FFT;
- sending (F) the packet to the outgoing interface,
wherein the entries in the FFT remain unchanged when the routing table changes.

2. The method of claim 1, wherein the FFT entry for a flow additionally includes a TTL value, and
wherein the method further comprises:
- when a packet is received, comparing its TTL value with the value from the FFT for the packet's flow; and
- when the values are not the same, the entry of the packet's flow is removed from the FFT.

## Patentansprüche

1. Verfahren zum Routing eines Pakets durch einen Router umfassend:
- das Aufstellen eines Flussidentifizierers anhand eines Headers eines empfangenen Pakets;
- Feststellen (A), ob der Flussidentifizierer in einer Flussweiterleitungstabelle - FFT enthalten ist;
wenn der Flussidentifizierer in der FFT enthalten ist, Ablesen (B) einer ausgehenden Schnittstelle des Routers aus der FFT;
wenn der Flussidentifizierer in der FFT nicht enthalten ist, Ablesen (C) eines ausgehenden Interface aus einer Routingtabelle des Routers und Eintragen eines Eingangs für den Fluss umfassend einen Flussidentifizierer und der aus der Routingtabelle abgelesenen ausgehenden Schnittstelle;
- Aktualisieren (E) der Empfangszeit des Paketflusses in der FFT;
- Senden (F) des Pakets zur ausgehenden Schnittstelle,
wobei die Einträge in der FFT ungeändert bleiben, wenn die Routingtabelle geändert wird.

2. Verfahren nach Anspruch 1, wobei der FFT-Eintrag zu einem Fluss außerdem einen TTL-Wert umfasst, und
wobei das Verfahren außerdem umfasst:
- wenn ein Paket empfangen wird, Vergleichen dessen TTL-Werts mit dem Wert aus der FFT für den Paketfluss; und
- wenn die Werte nicht übereinstimmen, der Eintrag des Paketflusses aus der FFT entfernt wird.

## Revendications

1. Une méthode de routage d'un paquet via un routeur comprenant:
- établissement d'un identifiant de flux sur la base de l'en-tête d'un paquet reçu;
- détermination (A) si l'identificateur de flux est présent dans une table de transfert de flux, FFT;
si l'identifiant de flux est présent dans la FFT, lecture (B) d'une interface sortante du routeur à partir de la FFT;
si l'identifiant de flux n'est pas présent dans la FFT, lecture (C) d'une interface sortante à partir d'une table de routage du routeur et addition d'une entrée pour le flux comprenant un identifiant de flux et l'interface sortante lue à partir de la table de routage;
- mise à jour (E) de l'heure d'arrivée du flux du paquet dans la FFT;
- envoi (F) du paquet à l'interface sortante,
dans laquelle les entrées de la FFT restent inchangées lorsque la table de routage change.

2. La méthode selon la revendication 1, dans laquelle l'entrée de la FFT pour un flux comprend en outre une valeur TTL, et
dans laquelle la méthode comprend en outre:
- lorsqu'un paquet est reçu, comparaison de sa valeur TTL avec la valeur de la FFT pour le flux du paquet; et
- lorsque les valeurs ne sont pas identiques, l'entrée du flux du paquet est supprimée de la FFT.
